# EUROPÄISCHE PATENTANMELDUNG

(11) **EP 1 293 689 A1**
(43) Veröffentlichungstag der Anmeldung: **19.03.2003**
(21) Anmeldenummer: 01122260.1
(22) Anmeldetag: 18.09.2001
(51) Int. Cl.: F16C 9/02, F16C 33/06

(54) **Kurbelwellenlager für ein Kraftfahrzeug**

(71) Anmelder: Ford Global Technologies, Inc., A subsidiary of Ford Motor Company, Dearborn, Michigan 48126 (US)
(72) Erfinder: Mayer, Kai Martin, 53757 At. Augustin (DE)
(74) Vertreter: Drömer, Hans-Carsten, Dipl.-Ing.

(57) **Zusammenfassung**

Die Erfindung betrifft ein Kurbelwellenlager für ein Kraftfahrzeug, bei welchem eine aus ADI (Austempered Ductile Iron, DIN EN 1564) hergestellte Kurbelwelle 1 ohne Zwischenschaltung weiterer Bauteile an einem aus Aluminium hergestellten Motorblock 2 gelagert ist. Die genannten Materialien haben eine sehr geringe Differenz der Wärmeausdehnungskoeffizienten, so dass das Lager auch bei Temperaturschwankungen zuverlässig arbeitet.

## Beschreibung

Die Erfindung betrifft ein Kurbelwellenlager für ein Kraftfahrzeug mit einer motorseitigen ersten Lagerfläche und einer hierauf gleitend angeordneten kurbelwellenseitigen zweiter Lagerfläche.

Die Kurbelwelle dient bei Brennkraftmaschinen dazu, die Auf- und Abbewegung der Kolben des Motors in eine kontinuierliche Rotationsbewegung umzuwandeln. Die Kurbelwelle ist zu diesem Zweck drehbeweglich am Motorblock gelagert. Dies geschieht beim Stand der Technik über mittelbar oder unmittelbar mit dem Motorblock verbundene erste Lagerflächen sowie mittelbar oder unmittelbar mit der Kurbelwelle verbundene zweite Lagerflächen, welche aufeinander gleiten.

Da Motorblöcke typischerweise ganz oder zumindest überwiegend aus Aluminium und Kurbelwellen aus Stahl oder GGG-Gusseisen hergestellt werden, unterliegen die Kurbelwellenlager aufgrund der unterschiedlichen Wärmeausdehnungskoeffizienten dieser Materialien einem temperaturabhängigen Spiel.

Bei hohen Motortemperaturen erhöht sich dieses Spiel, was zu einer nachteiligen Ölleckage führen kann. Bei sehr niedrigen Temperaturen beim Motorstart kann es dagegen sein, dass die Kurbelwelle im Kurbelwellenlager festklemmt. Zur Reduzierung der genannten Probleme ist es bekannt, spezielle Lagerhülsen zwischen der Kurbelwelle und dem Motorblock einzusetzen, welche zum Teil aus Aluminium und zum Teil aus Stahl bestehen. Nachteilig an diesen Lösungen ist jedoch der erhöhte Aufwand für die zusätzlichen Bauteile sowie das zusätzliche Gewicht der Stahlelemente.

Vor diesem Hintergrund war es Aufgabe der vorliegenden Erfindung, ein Kurbelwellenlager mit einfacher und kostengünstiger Bauweise bereitzustellen, welches unter allen Betriebsbedingungen funktionssicher ist.

Diese Aufgabe wird durch ein Kurbelwellenlager gemäß dem Gegenstand des Anspruchs 1 gelöst.

Vorteilhafte Ausgestaltungen sind in den Unteransprüchen enthalten.

Das erfindungsgemäße Kurbelwellenlager für ein Kraftfahrzeug weist eine motorseitige erste Lagerfläche und eine hierauf gleitende kurbelwellenseitige zweite Lagerfläche auf. Es ist dadurch gekennzeichnet, dass die genannte erste Lagerfläche ganz oder teilweise aus Aluminium und die genannte zweite Lagerfläche ganz oder teilweise aus ADI besteht.

Bei ADI handelt es sich um ein Gusseisen mit Kugelgraphit, wobei die Abkürzung ADI für "Austempered Ductile Iron" steht und der hierfür in der Norm DIN EN 1564 definierte Begriff "Bainitisches Gusseisen" lautet. Aus der Literatur ist im Automobilbereich die Verwendung von ADI zum Beispiel für eine Antriebswellenkomponente (vgl. die EP 0 968 868 A1), für eine Nockenwelle (US 5 028 281) und für ein Differentialgetriebe (US 5 082 507) bekannt. Es hat sich gezeigt, dass ADI auch als Material für die Lagerfläche eine Kurbelwelle verwendet werden kann, wenn die korrespondierende Lagerfläche am Motorblock ganz oder teilweise aus Aluminium besteht. Insbesondere kann mit dieser Materialkombination ein gegenüber Temperaturschwankungen robustes Kurbelwellenlager erzielt werden, welches weder bei hohen Temperaturen eine Ölleckage noch bei niedrigen Temperaturen ein Festklemmen zeigt.

Ein besonderer Vorteil der genannten Materialkombination besteht darin, dass die motorseitige erste Lagerfläche einstückig mit dem Motorblock ausgebildet werden kann, da Motorblöcke in der Regel ebenfalls ganz oder teilweise aus Aluminium hergestellt werden. Es ist daher nicht erforderlich, ein separates Bauteil oder einen Materialwechsel zur Bereitstellung der ersten Lagerfläche vorzusehen.

Weiterhin ist bei der vorgesehenen Materialkombination von Vorteil, dass auch die kurbelwellenseitige zweite Lagerfläche einstückig mit der Kurbelwelle ausgebildet werden kann. Das heißt, dass die gesamte Kurbelwelle aus ADI hergestellt werden kann, was ebenfalls einen Verzicht auf zusätzliche Bauteile und damit eine Reduzierung der Kosten ermöglicht.

Besonders vorteilhaft ist es, wenn die zuvor genannten Ausgestaltungen miteinander kombiniert werden, wenn also die erste Lagerfläche einstückig mit dem Motorblock und die zweite Lagerfläche einstückig mit der Kurbelwelle ausgebildet ist. Dies ermöglicht den vollständigen Verzicht auf zusätzliche Bauteile wie etwa Lagerhülsen, was sowohl die Herstellungskosten als auch das Gewicht des Kurbelwellenlagers minimiert.

Das Aluminium der ersten Lagerfläche und das ADI der zweiten Lagerfläche werden hinsichtlich der zur Auswahl stehenden Typen und Zusammensetzungen in vorteilhafter Weise derart gewählt, dass die Wärmeausdehnungskoeffizienten der Materialien um weniger als 10%, vorzugsweise um weniger als 6% voneinander abweichen. Bei derartig geringen Abweichungen der Wärmeausdehnungskoeffizienten ist sichergestellt, dass das Kurbelwellenlager im gesamten in der Praxis auftretenden Temperaturbereich zuverlässig funktioniert.

Im Folgenden wird die Erfindung mit Hilfe der Figur beispielhaft näher erläutert.

Die einzige Figur zeigt schematisch einen Schnitt durch ein Kurbelwellenlager.

In der Figur ist die Lagerung einer Kurbelwelle 1 an einem Motorblock 2 dargestellt, wobei die genannten Teile nur ausschnittsweise dargestellt sind. Die Kurbelwelle besteht in an sich bekannter Weise aus einem Abschlussblock 3, welcher über einen Wellenzapfen 4 mit einer Kurbelwange 5 verbunden ist. Die Kurbelwange 5 ist ihrerseits über einen Kurbelzapfen 6 mit einer nächsten Kurbelwange 7 verbunden usw..

Der Wellenzapfen 4 tritt durch eine Öffnung im Motorblock 2 hindurch. Zwischen dem Wellenzapfen 4 und den hieran angrenzenden Flächen 8 des Motorblockes 2 wird eine radiale Lagerung der Kurbelwelle 1 am Motorblock 2 bewirkt. Ferner wird zwischen dem Abschlussblock 3 und der Kurbelwange 5 einerseits und den hieran angrenzenden Flächen 8 des Motorblockes 2 andererseits eine axiale Lagerung der Kurbelwelle relativ zum Motorblock 2 bewirkt. Die mit der Kurbelwelle 1 in Kontakt stehenden Lagerflächen des Motorblockes 2 werden dabei insgesamt mit der Bezugsziffer 8 bezeichnet.

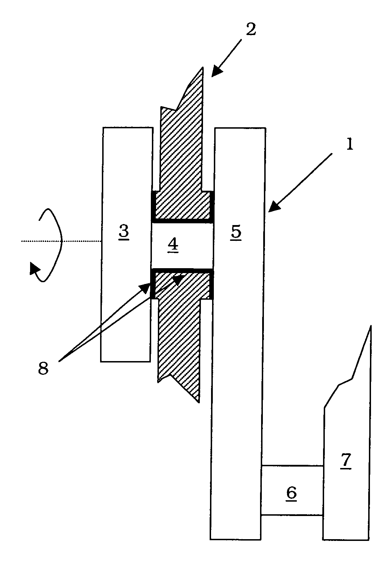

Während beim Stand der Technik zwischen der Kurbelwelle 1 und dem Motorblock 2 verschiedene Bauteile wie insbesondere Lagerhülsen aus besonderen Materialien vorgesehen sind, wird bei dem in Figur 1 dargestellten erfindungsgemäßen Kurbelwellenlager auf derartige zusätzliche Bauteile verzichtet. Dennoch wird eine hohe Funktionssicherheit dadurch erzielt, dass die Materialien des Motorblockes 2 und der Kurbelwelle 1 geeignet gewählt werden. Insbesondere kann der Motorblock auf Aluminium basieren, wie es z.B. bei dem Motor Ford Zetec SE vorgesehen ist. Die Kurbelwelle 1 ist dagegen aus ADI hergestellt. Das Material ADI, welches in der Norm DIN EN 1564 definiert wird, besitzt ein Matrixgefüge, das aus kohlenstoffreichem Austenit mit darin eingelagerten Nadeln des bainitischen Ferrits besteht. Bei der Herstellung dieses Werkstoffes wird nicht- oder nur niedriglegiertes Gusseisen mit Kugelgraphit einer nachfolgenden Wärmebehandlung unterzogen, die als Bainitisieren oder als Zwischenstufenvergüten bezeichnet wird. Die Wärmebehandlung umfasst das vollständige Austenitisieren des Gussteils bei Temperaturen, die zwischen 850°C und 950°C liegen. Anschließend wird das Material im Salzbad auf 250°C bis 400/450°C abgeschreckt, um ein Umwandeln des Austenits zu Perlit zu verhindern. Gussteile aus diesem Material können zum Beispiel von ADI Treatments (P.O. Box 38, Priest Street, Cradley Heath, West Midlands, B64 6JW, England) bezogen werden.

Der Wärmeausdehnungskoeffizient von zur Herstellung eines Motorblockes 2 verwendetem Aluminium beträgt typischerweise 18×10⁻⁷ K⁻¹. Der Wärmeausdehnungskoeffizient eines typischen ADI-Materials beträgt hingegen 17×10⁻⁷ K⁻¹, liegt also sehr nahe bei demjenigen des Aluminiums. Bei der Kombination dieser beiden Materialien zu einem Kurbelwellenlager gemäß der Figur treten somit sehr geringe Schwankungen des Lagerspiels mit der Temperatur auf. Hierdurch ist sichergestellt, dass es bei hohen Motortemperaturen nicht zu einer Ölleckage aufgrund eines erhöhten Spiels kommt, und dass bei sehr tiefen Temperaturen die Kurbelwelle sich nicht im Kurbelwellenlager verklemmt.

## Patentansprüche

1. Kurbelwellenlager für ein Kraftfahrzeug mit einer motorseitigen ersten Lagerfläche (8) und einer hierauf gleitend angeordneten kurbelwellenseitigen zweiten Lagerfläche, **dadurch gekennzeichnet, dass** die erste Lagerfläche ganz oder teilweise aus Aluminium und die zweite Lagerfläche ganz oder teilweise aus Austempered Ductile Iron (ADI) besteht.

2. Kurbelwellenlager nach Anspruch 1, **dadurch gekennzeichnet, dass** die erste Lagerfläche (8) einstückig mit dem Motorblock (2) ausgebildet ist.

3. Kurbelwellenlager nach Anspruch 1 oder 2, **dadurch gekennzeichnet, dass** die zweite Lagerfläche einstückig mit der Kurbelwelle (1) ausgebildet ist.

4. Kurbelwellenlager nach einem der Ansprüche 1 bis 3, **dadurch gekennzeichnet, dass** die Materialien der ersten und der zweiten Lagerfläche Wärmeausdehnungskoeffizienten haben, welche um weniger als 10%, vorzugsweise um weniger als 6% voneinander abweichen.
